# EUROPEAN PATENT APPLICATION

(11) **EP 1 903 420 A2**
(43) Date of publication of application: **26.03.2008**
(21) Application number: 07107608.7
(22) Date of filing: 07.05.2007
(51) Int. Cl.: G06F 1/24, G06F 1/26

(54) **Electronic Device Mounted with Memory Card and Reset Method of the Memory Card**

(30) Priority: 18.09.2006 KR 20060090055
(71) Applicant: Samsung Electronics Co., Ltd., Suwon-si, Gyeonggi-Do (KR)
(72) Inventor: Lee, Jeong-hun 108-605,Jugong Apartment, Gyeonggi-do (KR)
(74) Representative: Grünecker, Kinkeldey, Stockmair & Schwanhäusser Anwaltssozietät

(57) **Abstract**

An electronic device mounted with a memory card and a reset method of the memory card. The electronic device includes a power supply unit to supply power to a memory card, and a card interface unit to cut off power from the power supply unit and then resupply the power to the memory card. Accordingly, the memory card can exit an Inactive state very efficiently.

## Description

### BACKGROUND OF THE INVENTION

### 1. Field of the Invention

The present general inventive concept relates to an electronic device mounted with a memory card and a reset method of the memory card, and more specifically, to an electronic device mounted with a memory card that is capable of enabling an external memory to exit from an inactive state by resetting, via software, the external memory which entered the inactive state, and a reset method of the memory card.

### 2. Description of the Related Art

A conventional electronic device such as a digital camera and an MP3 player has a flash memory, which is a non-volatile storage medium for storing and reproducing data. Examples of such flash memory include an MMC (Multimedia Memory Card), a SD (Secure Digital) card, etc. Particularly, the MMC or the SD card can be mounted in an electronic device as an external memory.

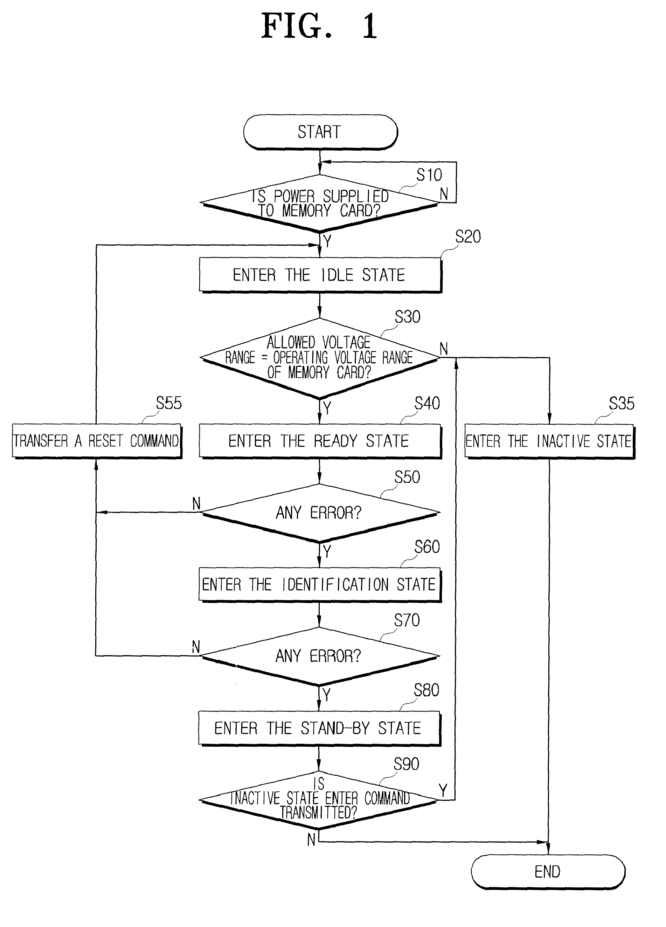

FIG. 1 is a flow chart illustrating a procedure of a memory card entering a Stand-by state, when the memory card is mounted in a conventional electronic device.

According to FIG. 1, after power is supplied to the memory card in operation S10, the memory card enters an Idle state in operation S20. Depending on whether an allowed voltage range corresponds to an operating voltage range of the memory card in operation S30, the memory card enters an Inactive state in operation S35 or a Ready state in operation S40.

If the memory card has entered the Ready state normally in operation S40 and no error has occurred in operation S50, the memory card enters the Identification state in operation S60. In contrast, if an error occurs in the Ready state in operation S50, a reset command is transferred to the memory card in operation S55 and therefore, the memory card enters the Idle state in operation S20.

If the memory card has entered the Identification state in operation S60 and no error has occurred in operation S70, the memory card enters the Stand-by state in operation S80. In contrast, if an error occurs in the Identification state in operation S70, a reset command is transferred to the memory card in operation S55 and therefore, the memory card enters the Idle state in operation S20.

If the memory card has entered the Stand-by state in operation S80 and an Inactive state Enter command is given to the memory card in operation S90, the memory card enters the Inactive state in operation S35. Once the memory card enters the Inactive state, it can no longer be used. To reset the memory card again, a user must physically disconnect the power supply to the memory card and resupply the power.

That is, in order for the memory card to exit the Inactive state, the user must remove the memory card in an electronic device and then put it back, or the user must disconnect the power supply to the memory card and resupply the power later.

### SUMMARY OF THE INVENTION

The present general inventive concept provides an electronic device mounted with a memory card that is capable of resetting the memory card via software to more efficiently enable the memory card to exit from an Inactive state, and a reset method of the memory card.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept are achieved by providing an electronic device, including: a power supply unit to supply power to a memory card, and a card interface unit to cut off power from the power supply unit and then resupply the power to the memory card.

The electronic device of the present general inventive concept may further include a control unit to control the card interface unit to cut off power from the power supply unit and then resupply the power to the memory card, if a determination is made that the memory card entered an Inactive state is made.

The control unit may determine that the memory card has entered the Inactive state if an ACK signal is not received from the memory card for longer than a predetermined period of time after the control unit has transmitted to the memory card a command to check an allowed voltage range.

The card interface unit may include a switch controlled by the control unit to be turned OFF and ON.

The foregoing and/or other aspects and utilities of the present general inventive concept may also be achieved by providing a photographing device, including a lens unit to form an optical image corresponding to an object to be photographed, an image pickup unit to photoelectrically transform the optical image into an electric video signal, a video signal processing unit to perform signal processing operations on the video signal, a socket in which a memory card is mounted, the memory card to store the video signal processed by the video signal processing unit, a card interface unit to interface data communication with the memory card, and a control unit to control the card interface unit to cut off power from the power supply unit and then resupply the power to the memory card.

The control unit may control the card interface unit to cut off power from the power supply unit and then resupply the power to the memory card, if a determination is made that the memory card entered an Inactive state.

In addition, the control unit may determine that the memory card has entered the Inactive state if an ACK signal is not received from the memory card for longer than a predetermined period of time after the control unit has transmitted to the memory card a command to check an allowed voltage range.

The card interface unit may include a switch controlled by the control unit to be turned OFF and ON.

The foregoing and/or other aspects and utilities of the present general inventive concept may also be achieved by providing a memory card reset method, including supplying power to a memory card, cutting off power supply to the memory card if a decision on the memory card entered to an Inactive state is made, and resupplying power to the memory card.

The determination that the memory card entered the Inactive state may be made if an ACK signal is not received from the memory card for longer than a predetermined period of time after the control unit has transmitted to the memory card a command to check an allowed voltage range.

The foregoing and/or other aspects and utilities of the present general inventive concept may also be achieved by providing a card interface unit of a photographing device, the card interface unit including a circuit to determine whether a memory card is mounted in the photographing device and to determine whether the memory card is in an inactive state, and a switch to automatically manipulate power supplied to the memory card when the memory card is determined to be in the inactive state.

The switch may automatically manipulate the power supplied to the memory card by turning the power supplied to the memory card OFF and then ON.

The circuit may transmit a command to the memory card to check an allowed voltage range to determine whether the memory card is in the inactive state.

The memory card may be in the inactive state if an ACK signal is not received from the memory card for longer than a predetermined period of time after the command to check the allowed voltage range is sent.

The foregoing and/or other aspects and utilities of the present general inventive concept may also be achieved by providing an electronic device with a mounted memory card, including a card interface unit to manipulate power supplied to the memory card based on a state of the memory card, and a control unit to determine whether the memory card is in an inactive state and to send a signal to the card interface unit to manipulate the power supplied to the memory card when it is determined that the memory card is in the inactive state.

The card interface unit may manipulate the power supplied to the memory card by turning the power supplied to the memory card OFF and then ON.

The control unit may determine whether the memory card is in the inactive state by transmitting a command to the memory card to check an allowed voltage range, and then waiting to receive an ACK signal from the memory card for a predetermined response time period.

The foregoing and/or other aspects and utilities of the present general inventive concept may also be achieved by providing a memory card reset method of a photographing device, the method including determining whether a memory card is mounted in the photographing device, determining whether the mounted memory card is in an inactive state, and automatically manipulating power supplied to the mounted memory card if the memory card is in the inactive state.

The power manipulation may include turning the power supplied to the memory card OFF and then ON.

The foregoing and/or other aspects and utilities of the present general inventive concept may also be achieved by providing a method of a photographing device with a memory card, the method including forming an optical image corresponding to an object to be photographed, photoelectrically transforming the optical image into an electric video signal, performing signal processing operations on the video signal, storing the processed video signal in the memory card, communicating data between the memory card and a card interface unit, and controlling the card interface unit to manipulate power to the memory card, based on the communicated data.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a flow chart illustrating a procedure of a memory card entering a Stand-by state, when the memory card is mounted in a conventional electronic device;

FIG. 2 is a schematic block diagram of a photographing device as an electronic device according to an embodiment of the present general inventive concept;

FIG. 3 illustrates a configuration of a circuit corresponding to a card interface unit in the photographing device of FIG. 2; and

FIG. 4 is a flow chart illustrating a procedure of a memory card entering a Stand-by state, when the memory card is mounted in the photographing device of FIG. 2.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

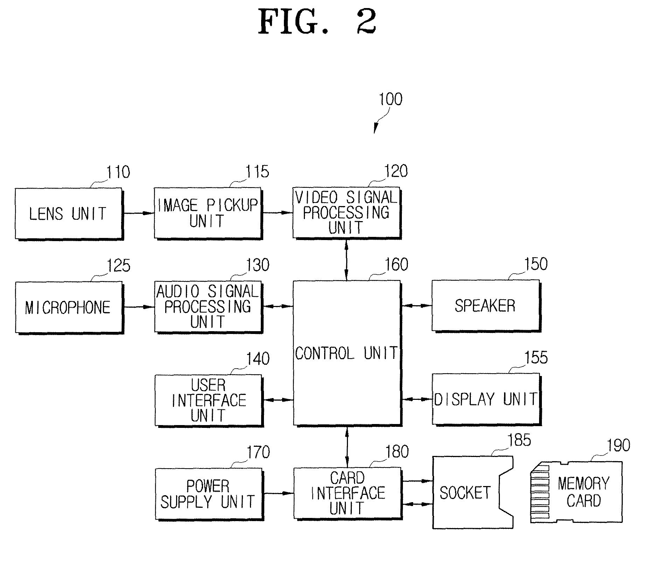

FIG. 2 is a block diagram illustrating a structure of a photographing device as an electronic device according to an embodiment of the present general inventive concept.

Referring to FIG. 2, the photographing device 100 includes a lens unit 110, an image pickup unit 115, a video signal processing unit 120, a microphone 125, an audio signal processing unit 130, a user interface unit 140, a speaker 150, a display unit 155, a control unit 160, a power supply unit 170, a card interface unit 180, and a socket 185 in which a memory card 190 is mounted.

A reflected light from an object to be photographed is incident on the lens unit 110. Then the light incidented through the lens unit 110 forms an optical image on the image pickup unit 115. The image pickup unit 115 includes a CCD (Charge Coupled Device) or a CMOS (Complementary Metal Oxide Semiconductor). The optical image formed on the image pickup unit 115 is photoelectrically transformed into an electric video signal and is output.

The video signal processing unit 120 may perform a plurality of signal processing operations on the video signal output from the image pickup unit 115, including gain control, noise elimination, gamma correction, luminance signal separation, video signal compression, etc., to thereby output the video signal as video data.

The microphone 125 converts an external sound wave to an electric signal that travels to the audio signal processing unit 130. The audio signal is then subjected to the signal processing operations performed in the audio signal processing unit 130 and is output as audio data.

The user interface unit 140 is equipped with a plurality of operating keys (not illustrated) to which a user command to operate the photographing device 100 is input. An input user command is then sent to the control unit 160.

The speaker 150 amplifies and outputs the audio signal processed by the audio signal processing unit 130 to a predetermined amplitude, and the display unit 155 displays the processed video signal on a screen.

The power supply unit 170 supplies power to each element the photographing device 100 needs in order to operate. As illustrated in FIG. 2, the power supply unit 170 supplies power to the memory card 190 mounted in the socket 185. Accordingly, the power supply unit 170 supplies 3V of DC power to the memory card 190.

The card interface unit 180 transfers a plurality of commands and data from the control unit 160 to the memory card 190, and transfers an ACK (i.e., acknowledgement) signal from the memory card 190 to the control unit 160. When under control of the control unit 160, the card interface unit 180 may cut off or resupply the power from the power supply unit 170, so that it may be able to reset the memory card 190 if the memory card 190 has entered the Inactive state.

The control unit 160 controls the overall operation of the photographing device, and communicates with the memory card 190 through the card interface unit 180. Accordingly, the control unit 160 transmits and/or receives a plurality of commands and data to and/or from the memory card 190. The control unit 160 may store in the memory card 190 audio data and audio data of which signals are processed by the video signal processing unit 120 and the audio signal processing unit 130, respectively. The control unit 160 may also transfer all the commands to the memory card 190, and may receive corresponding ACK signals from the memory card 190 to determine the state of the memory card 190 based on the corresponding ACK signals.

If it is determined that the memory card 190 has entered an Inactive state, the control unit 160 controls the card interface unit 180 to reset the memory card 190. In more detail, the control unit 160 may transfer a command to the memory card 190 to check an allowed voltage range if it is determined that the memory card 190 is mounted. If no ACK signal is received from the memory card 190 for longer than a predetermined period of time, the control unit 160 determines that the memory card 190 has entered the Inactive state.

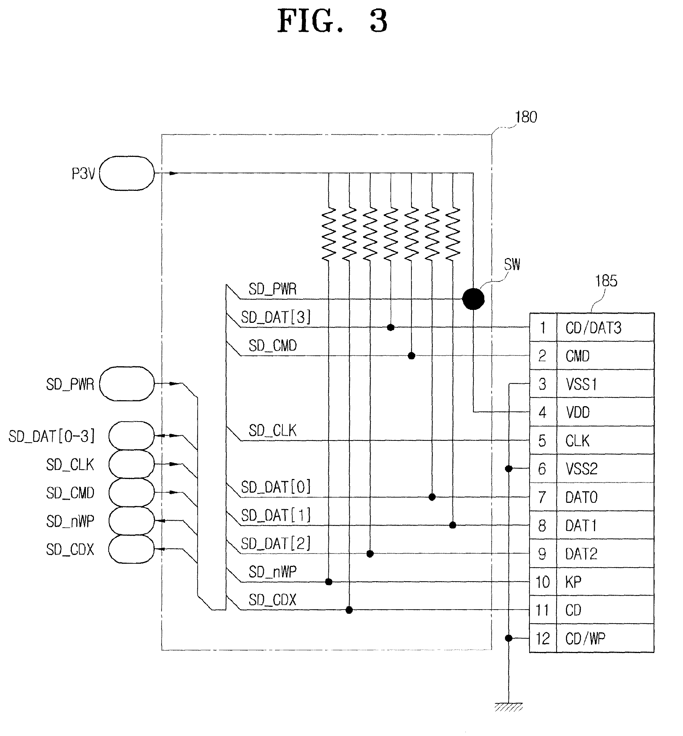

If it is determined that the memory card 190 has entered the Inactive state, the control unit 160 controls the card interface unit 180 to cut off the power supply to the memory card 190 and resupply it later. A configuration of the card interface unit 180 that cuts off and/or resupplies the power for the memory card 190 under control of the control unit 160 is described in further detail with reference to FIG. 3.

FIG. 3 illustrates the configuration of a circuit corresponding to the card interface unit 180 of FIG. 2 in the photographing device 100 of FIG. 2, according to an embodiment of the present general inventive concept.

Referring to FIGS. 2 and 3, the card interface unit 180 includes a switch SW to turn OFF and ON the power supply to a VDD terminal of the memory card 190 mounted in the socket 185. The switch SW includes a transistor or MOSFET (MOS Field Effect Transistor), and is turned ON or OFF by a power control signal output from the control unit 160. The power control signal may be sent to the switch SW through a power control line SD_PWR.

The data that is output from the control unit 160 includes image data and audio data output from the video signal processing unit 120 and the audio signal processing unit 130, respectively. Such data is either stored in the memory card 190 or read from the memory card 190 through a data line SD_DAT[0-3]. The control unit 160 provides a clock through a clock line SD_CLK, and communicates data and commands with the memory card 190.

The control unit 160 sends commands to the memory card 190 through a command line SC_CMD. The card interface unit 180 may also include an SD_nWP to read whether the memory card 190 is in an Inhibit write state, and an SD_CDX line to read whether the memory card 190 is mounted in the socket 185.

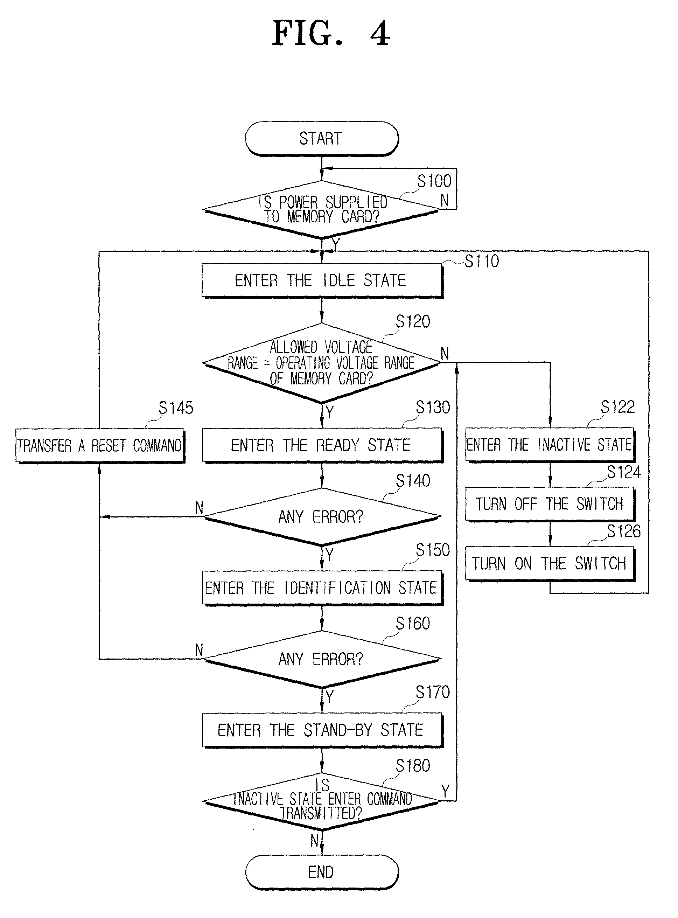

FIG. 4 is a flow chart illustrating a procedure of a memory card entering a Stand-by state, when a memory card 190 of FIG. 2 is mounted in the photographing device 100 of FIG. 2 according to an embodiment of the present general inventive concept.

Referring to FIGS. 2 through 4, when power is supplied to the memory card 190 in operation S100, the memory card 190 enters an Idle state in operation S110. That is, when the memory card 190 is mounted in the socket 185, 3V of DC power is supplied from the power supply to the memory card 190, and the memory card 190 enters the Idle state.

The control unit 160 determines whether an allowed voltage range corresponds to the operating voltage range of the memory card in operation S120. If it is determined that the memory card 190 is mounted in the memory card 190, the control unit 160 transmits to the memory card 190 a command to check the allowed voltage range. If no ACK signal is received from the memory card 190 for longer than a predetermined period of time, the control unit 160 determines that the memory card 190 has entered an Inactive state in operation S122.

The control unit 160 outputs data corresponding to '0' or '1' through the power control line SD_PWR to turn OFF the switch SW in operation S124, and outputs data corresponding to '1' or '0' through the power control line SD_PWR to turn ON the switch SW in operation S126. Then, the memory card 190 enters the Idle state again in operation S110.

In operation S120, when the controller 160 transmits to the memory card 190 a command to check the allowed voltage range and then receives an ACK signal from the memory card 190 within a response time, the memory card 190 enters a Ready state in operation S130. If no error occurs while the control unit 160 is normally reading memory card information out of the memory card 190 in operation S140, the memory card 190 enters an Identification state in operation S150. Accordingly, memory card information which the control unit 160 reads out of the memory card 190 includes the memory card's producer ID, production date, version, serial number, etc.

In the Identification state, the control unit 160 reads out the ID of the socket in which the memory card 190 is mounted. If this operation is carried out without an error in operation S160, the memory card 190 enters a Stand-by state in operation S170. The above-described operations S130 to S170 denote an initialization procedure of the memory card 190. If an error occurs in operations S140 and S160, the control unit 160 transmits a reset command to the memory card 190 in operation S145 to thereby make the memory care 190 enter the Idle state in operation S110.

In the Stand-by state, if the control unit 160 issues an Inactive state Enter command to a memory card 190 which is not being used in operation S180, the memory card 190 having received the Inactive state Enter command enters the Inactive state in operation S122. The control unit 160 turns the switch ON or OFF, when needed, to awaken the memory card 190 from the Inactive state.

When the memory card 190 has entered the Inactive state following the above-described procedure, the control unit 160 turns OFF and ON the power supply corresponding to the memory card 190, so that the memory card 190 may enter the Idle state.

As explained above, the present general inventive concept is capable of enabling a memory card to exit an Inactive state very efficiently, by cutting off and then resupplying power to the memory card via software. This allows the user to use the memory card more conveniently.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. An electronic device, comprising:
a power supply unit to supply power to a memory card; and
a card interface unit to cut off power from the power supply unit and then resupply the power to the memory card.

2. The electronic device according to claim 1, further comprising:
a control unit to control the card interface unit to cut off power from the power supply unit and then resupply the power to the memory card, if a determination is made that the memory card entered an Inactive state.

3. The electronic device according to claim 2, wherein the control unit determines that the memory card has entered the Inactive state if an ACK signal is not received from the memory card for longer than a predetermined period of time after the control unit has transmitted to the memory card a command to check an allowed voltage range.

4. The electronic device according to claim 2, wherein the card interface unit comprises:
a switch controlled by the control unit to be turned OFF and ON.

5. A photographing device, comprising:
a lens unit to form an optical image corresponding to an object to be photographed;
an image pickup unit to photoelectrically transform the optical image into an electric video signal;
a video signal processing unit to perform signal processing operations on the video signal;
a socket in which a memory card is mounted, wherein the memory card stores the video signal processed by the video signal processing unit;
a card interface unit to interface data communication with the memory card; and
a control unit to control the card interface unit to cut off power from the power supply unit and then resupply the power to the memory card.

6. The photographing device according to claim 5, wherein the control unit controls the card interface unit to cut off power from the power supply unit and then resupply the power to the memory card, if a determination is made that the memory card entered an Inactive state.

7. The photographing device according to claim 6, wherein the control unit determines that the memory card has entered the Inactive state if an ACK signal is not received from the memory card for longer than a predetermined period of time after the control unit has transmitted to the memory card a command to check an allowed voltage range.

8. The photographing device according to claim 6, wherein the card interface unit comprises:
a switch controlled by the control unit to be turned OFF and ON.

9. A memory card reset method, comprising:
supplying power to a memory card;
cutting off power supply to the memory card if a determination is made that the memory card has entered an Inactive state; and
resupplying power to the memory card.

10. The memory card reset method according to claim 9, wherein the determination that the memory card has entered the Inactive state is made if an ACK signal is not received from the memory card for longer than a predetermined period of time after the control unit has transmitted to the memory card a command to check an allowed voltage range.

11. A card interface unit of a photographing device, the card interface unit comprising:
a circuit to determine whether a memory card is mounted in the photographing device and to determine whether the memory card is in an inactive state; and
a switch to automatically manipulate power supplied to the memory card when the memory card is determined to be in the inactive state.

12. The card interface unit of claim 11, wherein the switch automatically manipulates the power supplied to the memory card by turning the power supplied to the memory card OFF and then ON.

13. The card interface unit of claim 12, wherein the circuit transmits a command to the memory card to check an allowed voltage range to determine whether the memory card is in the inactive state.

14. The card interface unit of claim 13, wherein the memory card is in the inactive state if an ACK signal is not received from the memory card for longer than a predetermined period of time after the command to check the allowed voltage range is sent.

15. An electronic device with a mounted memory card, comprising:
a card interface unit to manipulate power supplied to the memory card based on a state of the memory card; and
a control unit to determine whether the memory card is in an inactive state and to send a signal to the card interface unit to manipulate the power supplied to the memory card when it is determined that the memory card is in the inactive state.

16. The control device of claim 15, wherein the card interface unit manipulates the power supplied to the memory card by turning the power supplied to the memory card OFF and then ON.

17. The control device of claim 15, wherein the control unit determines whether the memory card is in the inactive state by transmitting a command to the memory card to check an allowed voltage range, and then waiting to receive an ACK signal from the memory card for a predetermined response time period.

18. A memory card reset method of a photographing device, the method comprising:
determining whether a memory card is mounted in the photographing device;
determining whether the mounted memory card is in an inactive state; and
automatically manipulating power supplied to the mounted memory card if the memory card is in the inactive state.

19. The memory card reset method of claim 15, wherein the power manipulation comprises turning the power supplied to the memory card OFF and then ON.

20. A method of a photographing device with a memory card, the method comprising:
forming an optical image corresponding to an object to be photographed;
photoelectrically transforming the optical image into an electric video signal;
performing signal processing operations on the video signal;
storing the processed video signal in the memory card;
communicating data between the memory card and a card interface unit; and
controlling the card interface unit to manipulate power to the memory card, based on the communicated data.
